**Europäisches Patentamt**

**European Patent Office**

**Office européen des brevets**

(19)

(11) Numéro de publication: **0 211 703**
**B1**

(12) **FASCICULE DE BREVET EUROPEEN**

(45) Date de publication du fascicule du brevet:
14.03.90

(51) Int. Cl.⁴: **F02K 7/18**, F02K 9/97

(21) Numéro de dépôt: **86401364.4**

(22) Date de dépôt: **23.06.86**

(54) **Dispositif de fermeture temporaire d'un orifice interne d'un propulseur.**

(30) Priorité: **03.07.85 FR 8510131**

(43) Date de publication de la demande:
**25.02.87 Bulletin 87/9**

(45) Mention de la délivrance du brevet:
**14.03.90 Bulletin 90/11**

(84) Etats contractants désignés:
**DE GB IT SE**

(56) Documents cités:
**DE-A- 2 458 180**
**DE-A- 2 458 180**
**FR-A- 2 177 880**
**FR-A- 2 189 646**
**FR-A- 2 376 301**
**GB-A- 1 468 814**
**GB-A- 2 068 090**
**US-A- 2 177 880**
**US-A- 3 564 845**
**US-A- 3 879 942**
**US-A- 3 879 942**

(73) Titulaire: **SOCIETE NATIONALE DES POUDRES ET EXPLOSIFS, 12, quai Henri IV, F-75181 Paris Cédex 04(FR)**

(72) Inventeur: **Robin, Serge, 16 rue Levieux, F-33000 Bordeaux(FR)**
Inventeur: **Caranove, Georges, Chemin de Monteillon, F-33160 Saint-Medard-en-Jalles(FR)**

ACTORUM AG

## Description

L'invention concerne un dispositif de fermeture destiné à être placé à l'amont de la structure d'une chambre de combustion d'un propulseur, ce dispositif comportant un bouchon éjectable qui obture l'orifice interne situé en amont de la chambre de combustion.

De tels dispositifs sont utilisés pour obturer un orifice interne avant le fonctionnement et durant le fonctionnement de la chambre de combustion située en aval dans laquelle est généralement placé un chargement propulsif réalisé en propergol solide. A l'amont de tels dispositifs de fermeture temporaire il est connu de placer soit une entrée d'air de statoréacteur, soit une autre chambre de combustion qui peut notamment recevoir un chargement propulsif de croisière, un chargement propulsif de surpoussée ou un chargement autopyrolisable générant un gaz combustible introduit dans la chambre de combustion aval du propulseur.

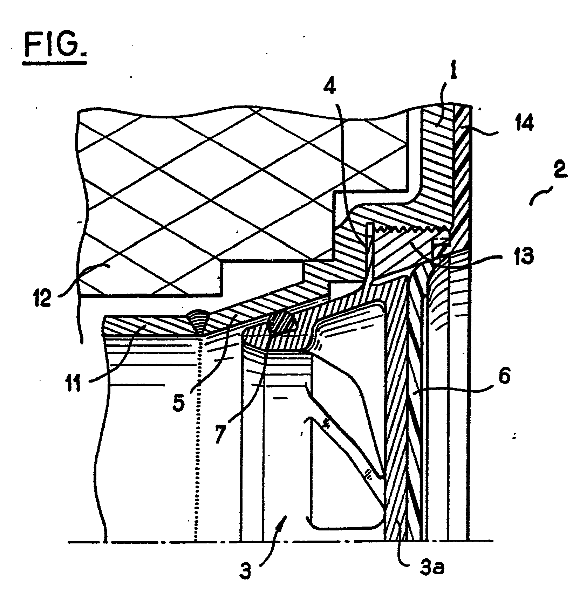

De tels dispositifs de fermeture temporaire d'un orifice interne d'un propulseur en utilisant un bouchon éjectable sont par exemple décrits dans les brevets FR 2 177 880, US 3,879,942 ou DE 24 58 180 qui décrivent notamment des propulseurs à propergols solides dont la structure qui forme le corps du propulseur détermine deux chambres de combustion, le brevet US 3,879,942 comportant la description de l'une des applications possibles aux statoréacteurs qui est schématiquement représentée à la figure 8 de ce brevet.

Les dispositifs de fermeture temporaire doivent permettre une isolation totale et permanente dans toutes les conditions, y compris des conditions anormales non destructrices telles que chute ou défaut d'operculage de la tuyère, et par exemple le maintien en place d'un dispositif de fermeture par une pression de quelques bars dans la chambre de combustion arrière, n'offre pas une fiabilité suffisante pour être retenue sur des missiles performants. Les dispositifs de fermeture doivent par ailleurs présenter un poids réduit et un minimum d'encombrement et toutes les sécurités latérales ou axiales comportant des articulations ou des guidages en translation alourdissent le dispositif et restreignent le volume disponible de la chambre de combustion située en aval du missile. De plus, l'éjection des bouchons d'obturation de tous les dispositifs de fermeture temporaire actuellement connus nécessitent une surpression importante en amont, et si cette surpression ne présente que peu d'inconvénients lorsque de part et d'autre de ce dispositif sont disposées deux chambres de combustion fonctionnant l'une après l'autre, il n'en est pas de même lorsque la chambre située en amont est utilisée comme chambre de surpoussée finale d'un missile, ou lorsqu'en amont est située une entrée d'air de statoréacteur. Dans ces applications particulières il est alors très important que non seulement l'éjection des bouchons s'effectue avec une surpression minimale à l'amont, mais qu'en plus l'éjection se produise dans des conditions les plus constantes possibles, l'instant précis d'éjection étant très important notamment lorsqu'un allumeur met à feu un chargement propulsif situé en amont, car le gradient de montée en pression est alors de l'ordre de 500 à 1000 bars par seconde, et dans ces applications l'utilisation de systèmes de sécurité par élasticité ne permet que très difficilement une reproductibilité d'éjection des bouchons.

La présente invention a pour but d'obtenir l'éjection des bouchons d'obturation des dispositifs de fermetures temporaires sous l'effet d'une surpression minimale à l'amont, ou même en l'absence de toute surpression, tout en présentant une sécurité absolue de la fermeture de ce bouchon avant et durant le fonctionnement de la chambre de combustion située en aval. L'invention se rapporte à un dispositif situé à l'amont de la structure d'une chambre de combustion d'un propulseur comportant un bouchon éjectable solidarisé à la structure par un élément frangible et se caractérise en ce que d'une part l'élément frangible est constitué d'une couronne périphérique de cisaillement qui appartient au bouchon éjectable et en ce que d'autre part ce bouchon est muni d'une portée située à une distance prédéterminée d'une butée longitudinale amont de la structure, est réalisé en matériau ablatable et a la forme générale d'un cône de révolution dont la grande base est située à l'aval et dont le demi-angle au sommet est supérieur à l'angle de frottement des surfaces et en ce que sa face aval est recouverte par une protection thermique.

L'élément frangible non calibré se rompt sous une pression aval inférieure au tiers de la pression de combustion dans la chambre aval et la distance longitudinale entre la portée du bouchon et la butée amont est supérieure à l'épaisseur longitudinale de l'élément frangible. L'élément frangible se rompt par cisaillement et il est constitué par une couronne périphérique de cisaillement qui appartient au bouchon éjectable. La couronne périphérique de cisaillement peut être réduite par entailles à un ensemble de languettes périphériques, et si le bouchon est réalisé en deux parties vissables cette couronne périphérique peut alors appartenir à la structure du propulseur, notamment lorsqu'une virole solidaire de cette structure est interposée entre cette structure et le bouchon éjectable, la couronne périphérique étant alors usinée dans cette virole. Cette virole et le bouchon sont réalisés en matériau ablatable dans les conditions thermodynamiques qui règnent dans les chambres de combustion des propergols solides, le point de fusion de ces matériaux pouvant être compris entre 600 et 1200°C et pouvant donc être réalisés en alliages à base d'aluminium.

Avantageusement le bouchon est creux et présente une section longitudinale en forme de U dont le fond est situé vers la chambre de combustion, la partie tubulaire de ce bouchon étant réduite à au moins trois bras qui assurent le guidage du bouchon dans l'orifice de la structure du propulseur.

Le bouchon a la forme générale d'un cône de révolution dont la grande base est située à l'aval, une telle forme permettant une éjection du bouchon pratiquement sans aucune surpression en amont lorsque le demi-angle au sommet du cône est supérieur à l'angle de frottement des surfaces latérales des cônes du bouchon et de la structure du propulseur.

Les avantages obtenus grâce à cette invention consistent essentiellement en ce que l'éjection du bouchon du dispositif de fermeture temporaire est obtenue sous l'effet d'une surpression minimale, à l'amont, qui est bien déterminée et reproductible, ce qui permet de prévoir exactement les interactions sur les éléments du missile, et cela tout en permettant une sécurité absolue puisqu'il est possible d'utiliser un élément frangible qui est suffisamment résistant et qui n'a pas besoin d'être calibré avec précision pour se rompre dans des conditions bien déterminées, puisque la rupture de cet élément frangible est provoquée par la mise en pression initiale de la chambre de combustion située à l'aval du dispositif, et non par la surpression qui s'établit ultérieurement en amont. De plus le dispositif de fermeture temporaire selon l'invention présente un encombrement et un poids très réduits qui facilitent son intégration dans les missiles, qui augmentent la dégradabilité du bouchon lors de son éjection dans la chambre de combustion située en aval, et qui facilitent l'éjection finale de ce bouchon au travers de la tuyère arrière du missile.

Dans ce qui suit, l'invention est exposée plus en détail à l'aide d'une figure correspondant à une demi-coupe axiale d'un dispositif de fermeture temporaire d'une entrée d'air de statoréacteur, selon l'invention, située au niveau du raccord de cette entrée d'air à la chambre principale de combustion du statoréacteur.

Selon la figure l'orifice interne à obturer temporairement est une canalisation 11 d'entrée d'air d'un statoréacteur qui est raccordée à la structure du propulseur dont la paroi transversale 1 sépare la chambre de combustion 2 située en aval des équipements embarqués 12 situés en amont. La partie centrale de cette paroi est usinée selon un cône de révolution 5 dont la grande ouverture orientée vers l'aval comporte deux chambrages cylindriques successifs, le chambrage de plus grand diamètre étant fileté pour recevoir une bague 13 à surface interne conique qui enserre la couronne périphérique 4 du bouchon éjectable 3. Le plus petit chambrage présente une arête vive au contact de cette couronne qui se raccorde sur sa face aval au corps du bouchon allumeur au moyen d'une entaille circulaire d'un diamètre légèrement plus faible que le diamètre de cet petit chambrage. La profondeur axiale de ce chambrage est légèrement supérieure à la distance axiale déterminée qui existe entre la butée longitudinale 5 formée par le cône interne de la structure 1 et la portée de ce bouchon 3 qui est formée par le cône externe du bouchon, cette distance axiale correspondant à trois fois l'épaisseur de la couronne périphérique 4 de cisaillement. La jupe du bouchon conique comporte une gorge périphérique dans laquelle est placée un joint torique 7 placé au contact du cône interne de la structure, et la face aval du fond 3a de ce bouchon est recouverte par une protection thermique 6 moulée dont le bord est conformé en joint à lèvre permettant le déplacement du bouchon jusqu'au contact du cône interne de la structure 1, la paroi traversale de cette structure et la bague 13 réalisée en matériau réfractaire étant elles-mêmes recouvertes par la protection thermique 14.

Lors de la mise à feu du chargement propulsif d'accélération contenu dans la chambre de combustion 2, lorsque la pression atteint environ le tiers de la pression nominale de combustion, la couronne périphérique 4 est cisaillée et le bouchon 3 est plaqué contre le cône interne 5 de la structure qui constitue une butée, et la compression du joint torique 7 assure une sécurité supplémentaire d'étanchéïté. Le bouchon éjectable 3 reste dans cette position d'obturation tant que la pression de combustion en aval subsiste, mais dès la fin de cette combustion dans la mesure où le demi-angle du cône est supérieur à l'angle de frottement des deux surfaces coniques la simple force de rappel élastique du joint torique 7 permet de replacer le bouchon sensiblement dans sa position initiale sans qu'il ne soit besoin d'aucune surpression en amont, et dès que les orifices d'admission d'air extérieurs au missile sont dégagés de leur protection aérodynamique, le bouchon 3 est immédiatement éjecté par la tuyère arrière du missile après avoir traversé la chambre de combustion 2.

**Revendications**

1. Dispositif de fermeture temporaire d'un orificer situé à l'amont de la structure (1) d'une chambre de combustion (2) d'un propulseur, comportant un bouchon éjectable (3) solidarisé à la structure (1) par un élément frangible pouvant se rompre sous une pression aval inférieure au tiers de la pression de combustion dans la chambre (2) caractérisé en ce que d'une part, l'élément frangible est constitué par une couronne périphérique (4) de cisaillement qui appartient au bouchon éjectable (3) et en ce que d'autre part ce bouchon (3), est muni d'une portée située à une distance prédéterminée d'une butée longitudinale amont (5) de la structure (1), est réalisé en matériau ablatable, a la forme générale d'un cône de révolution dont la grande base est située à l'aval et dont le demi-angle au sommet est supérieur à l'angle de frottement des surfaces et en ce que sa face aval est recouverte par une protection thermique (6).

2. Dispositif selon la revendication 1, caractérisé en ce que le bouchon est creux et présente une section longitudinale en forme de U dont le fond (3a) est situé vers la chambre de combustion (2).

3. Dispositif selon la revendication 2, caractérisé en ce que la partie tubulaire du bouchon est réduite à au moins trois bras de guidage.

**Claims**

1. Temporary closing device for an orifice situated upstream of the structure (1) of a combustion chamber (2) of a propulsion system, comprising an ejectable plug (3) joined integrally to the structure (1) by a frangible member capable of rupturing under a downstream pressure of less than one third of the combustion pressure in the chamber (2), characterized in that, on the one hand, the frangible member consists of a peripheral shear crown ring (4) which forms part of the ejectable plug (3) and in that, on the other hand, this plug (3) is provided with a bearing situated at a predetermined distance from a lengthwise end stop (5) upstream of the structure (1), is made of ablatable material, is generally in the shape of a cone of revolution whose large base is placed downstream and whose half-angle at the apex is greater than the angle of friction of the surfaces and in that its downstream face is covered by a heat protection (6).

2. Device according to Claim 1, characterized in that the plug is hollow and has a lengthwise section in the shape of a U whose bottom (3a) is placed near the combustion chamber (2).

3. Device according to Claim 2, characterized in that the tubular part of the plug is reduced to at least three guiding arms.

**Patentansprüche**

1. Vorrichtung zum zeitweisen Verschließen einer Öffnung, die stromauf bezüglich der Konstruktion (1) einer Verbrennungskammer (2) eines Triebwerks angeordnet ist, mit einem auswerfbaren Stopfen (3), der an der Konstruktion (1) durch ein abreißbares Element befestigt ist, das unter Einwirkung eines stromab herrschenden Drucks reißen kann, der einem Drittel des Verbrennungsdrucks in der Kammer (2) entspricht, dadurch gekennzeichnet, daß einerseits das abreißbare Element aus einer am Rand verlaufenden Scherkrone (4) besteht, die Bestandteil des auswerfbaren Stopfens (3) ist und dadurch, daß andererseits der Stopfen (3) mit einer Auflagefläche versehen ist, die mit einem vorbestimmten Abstand zu einem stromauf gelegenen Längsanschlag (3) der Konstruktion (1) gelegen ist, aus einem abbrennbaren Material besteht, eine im allgemeinen rotationssymmetrische konische Form hat, deren große Basis stromab gelegen ist und dessen Spitzenhalbwinkel größer als der Reibungswinkel der Oberflächen ist und dadurch, daß die stromab gelegene Seite mit einem Hitzeschild (2) bedeckt ist.

2. Vorrichtung nach Anspruch 1, dadurch gekennzeichnet, daß der Stopfen hohl ist und einen U-förmigen Längsschnitt aufweist, dessen Boden (3a) in Richtung auf die Verbrennungskammer (2) orientiert ist.

3. Vorrichtung nach Anspruch 2, dadurch gekennzeichnet, daß der rohrförmige Teil des Stopfens auf mindestens drei Führungsarme reduziert ist.

FIG.